# EUROPEAN PATENT SPECIFICATION

(11) **EP 3 163 920 B1**
(45) Date of publication and mention of the grant of the patent: **04.12.2019**
(21) Application number: 14896063.6
(22) Date of filing: 17.11.2014
(51) Int. Cl.: H04W 8/12, G06F 21/60, H04L 29/06, H04W 12/08, H04W 76/14, H04W 4/02, H04W 8/04, H04W 12/00

(54) **METHOD FOR PROCESSING PROSE SERVICE AUTHORIZATION CHANGE, FIRST NETWORK ELEMENT AND SECOND NETWORK ELEMENT**
VERFAHREN ZUR VERARBEITUNG VON AUTORISIERUNGSÄNDERUNGEN EINES PROSE-DIENSTES, ERSTES NETZWERKELEMENT UND ZWEITES NETZWERKELEMENT
PROCÉDÉ POUR TRAITER UN CHANGEMENT D'AUTORISATION DE SERVICE PROSE, PREMIER ÉLÉMENT DE RÉSEAU ET SECOND ÉLÉMENT DE RÉSEAU

(30) Priority: 24.06.2014 CN 201410288665
(43) Date of publication of application: 03.05.2017
(73) Proprietor: ZTE Corporation, Shenzhen, Guangdong 518057 (CN)
(72) Inventor: LIANG, Shuang, Shenzhen Guangdong 518057 (CN); ZHU, Jinguo, Shenzhen Guangdong 518057 (CN); LU, Fei, Shenzhen Guangdong 518057 (CN)
(74) Representative: J A Kemp LLP
(86) International application number: PCT/CN2014/091296
(87) International publication number: WO 2015/196704

(56) References cited:
- WO-A1-2014/089804
- "3rd Generation Partnership Project; Technical Specification Group Services and System Aspects; Proximity-based services (ProSe); Stage 2 (Release 12)", 3GPP STANDARD; 3GPP TS 23.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.1.0, 20 June 2014 (2014-06-20), pages 1-60, XP050774112,
- HUAWEI ET AL: "Revocation Procedures for ProSe Direct Service", 3GPP DRAFT; 23303_CR0068R3_PROSE_(REL-12)_S2-142206_20 63_1762_PROSE SERVICE REVOCATION PROCEDURE_V2.3, 3RD GENERATION PARTNERSHIP PROJECT (3GPP), MOBILE COMPETENCE CENTRE ; 650, ROUTE DES LUCIOLES ; F , vol. SA WG2, no. Phoenix, Arizona, USA; 20140519 - 20140523 10 June 2014 (2014-06-10), XP050801339, Retrieved from the Internet: URL:http://www.3gpp.org/ftp/Meetings_3GPP_ SYNC/SA/Docs/ [retrieved on 2014-06-10]
- ORANGE: "Pseudo-CR on description of the ProSe Service Authorization Procedure", 3GPP DRAFT; C4-141081_WAS_C4-140972_AUTHORIZATION PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. Phoenix; 20140519 - 20140523 23 May 2014 (2014-05-23), XP050810589, Retrieved from the Internet: URL:http://www.3gpp.org/ftp/tsg_ct/WG4_pro tocollars_ex-CN4/TSGCT4_65_Phoenix/Docs/ [retrieved on 2014-05-23]
- '3rd Generation Partnership Project (3GPP) Technical Specification Group. Technical Specification Group Services and System Aspects; Study on architecture enhancements to support Proximity-based Services (ProSe) (Release 12' 3GPP TR 23.703 V 1.0.0 31 December 2013, XP050728677

## Description

### Technical Field

The present invention relates to the field of mobile communication, and more particularly to a method for processing an authorization change of a Proximity-based Service (ProSe), a first network element device, a second network element device and a third network element device.

### Background of the Related Art

In a process of implementing the technical solutions of the embodiment of the present invention, the inventor of the present invention at least finds the following technical problems in a related technology:
in order to keep competitive power of a 3rd-Generation (3G) mobile communication system in the field of communication, provide higher-rate, lower-delay and more personalized mobile communication service for a user and simultaneously reduce operation cost of an operating company, a 3rd Generation Partnership Project (3GPP) standard working group is committed to research on an Evolved Packet System (EPS).

When two pieces of User Equipment (UE) communicate through an EPS network, the two pieces of UE are required to create bearers through an EPS respectively. However, in consideration of rapid development of intelligent UE and various mobile Internet services, it is expected to find proximal friends for communication in many services, so that ProSes are promoted to emerge. UE supporting such a function may communicate through a specific resource authorized by a network. At this moment, a communication path may not lead back to a core network. Such a communication manner reduces detouring of a data route on one hand, and also reduces a network data load on the other hand.

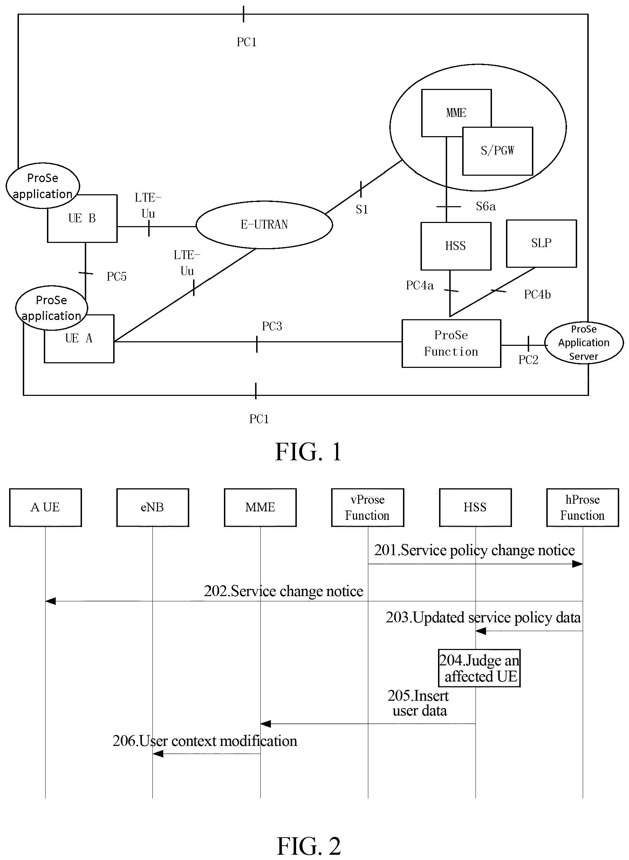

After introduction of a ProSe, some network elements and interfaces are added in a network to support this function, specifically as shown in FIG. 1 (a system architecture diagram of FIG. 1 only includes network elements related to the present invention):
UEA/UEB supporting a ProSe function: which may discover and communicate with each other after obtaining an authorization from a network side;
a ProSe function: the function entity is arranged to support introduction of a ProSe, and mainly finishes authorization about that the UE discovers and is discovered and matching, and in some solutions, the network element is also responsible for mutual discovery of the protocol UE;
an Evolved Universal Terrestrial Radio Access Network (EUTRAN): which provides bottom-layer access and necessary discovery and communication resources for a ProSe UE;
an Evolved Packet Core Network (EPC): which includes a Mobility Management Entity (MME) and a Serving Gateway/Packet Data Network Gateway (SGW/PGW), herein these network elements provides bottom-layer access for the UE to access the ProSe function;
a Home Subscriber Server (HSS): which includes all functions of a Home Location Register (HLR), is a permanent storage location of subscription data of a user and is located in a subscribed home network of the user, herein the network element is required to store subscription data related to the ProSe after the ProSe is introduced;
a Secure User Plane Location Platform (SLP): which is arranged to help to discover a proximal UE; and
a ProSe application server: which is arranged to map an identifier of a user application layer and a user identifier of the user in a 3GPP network.

When being expected to be identified by another UE in a network, a ProSe UE is required to initiate an authorization request to its own ProSe function, and once being successfully authorized, the UE may broadcast its own identity in the network for another user to discover. While for a UE which expects to discover another UE, the UE may monitor a specific channel or content to discover a specific user after network authorization is finished.

When UE requests to use a ProSe, i.e. device-to-device discovery and communication, a subscription authorization and an authorization of a ProSe function entity are required. If being in a roaming state, the UE also requires an authorization of a visited network. These authorizations may also be withdrawn in a specific environment, and once the authorizations are withdrawn, the UE is forbidden to use the ProSe. An authorization withdrawing flow of a Visited Public Land Mobile Network (VPLMN) is shown in FIG. 2.

In Step 201, a visited network or a local network triggers reauthorization of a ProSe due to an authorization change of the ProSe. The visited network or the local network initiates a service policy change notice to a home network of UE. The notice may be initiated for a specific UE, may also be initiated for all UEs in a Public Land Mobile Network (PLMN), the former is required to carry International Mobile Subscriber Identification Number (IMSI) information, and the latter is required to indicate a PLMN of which UE is required to be reauthorized, i.e. a Home Public Land Mobile Network Identifier (HPLMN ID) of the home network of the UE. The notice further carries an ID of a PLMN receiving a policy change, i.e. the PLMN initiating reauthorization, and service policy changes, for example, a communication and/or discovery process requires reauthorization.

In Step 202, a ProSe Function of the home network initiates a service change notice to an affected UE after receiving the service policy change notice, or notifies the UE of a service change when the UE initiates a service request next time. If the IMSI is not carried in Step 201, the ProSe Function may be required to send multiple messages to the related UE.

In Steps 203∼204, the ProSe Function of the home network sends updated service policy data carrying changed ProSe service data to a Home Subscriber Server (HSS). If the IMSI is included in Step 201, the IMSI is required to be included in Step 203. If the notice does not carry the IMSI, the HSS is required to judge which UEs may be affected according to the ID of the PLMN which requires reauthorization, and updates subscription data of the UE.

Here, the HSS is abbreviation of Home Subscriber Server, and is an important part of a control layer in an Internet Protocol (IP) Multimedia Subsystem (IMS). The HSS supports a main user database of an IMS network entity arranged to process calling/sessions, includes a user configuration file, executes identity authentication and authorization of a user, and may provide information about a physical location of the user.

In Steps 205∼206, for the affected UE, the HSS may judge to reinsert user data into an MME where the UE is registered according to a registration state of the UE. The MME judges a policy change type, and if a broadcast policy of the UE changes and an S1 bearer is created for the UE, the MME is required to notify that authorization information of the ProSe changes through a user context modification message.

Thus it can be seen that, in the conventional technology, it is always necessary to notify to wirelessly withdraw a related resource through an HSS when authorizations of a visited network change because broadcast UE needs to use a network resource of the visited network. However, under some conditions, the authorizations may temporally change, for example, the authorizations temporally change due to traffic control, and the authorizations may be recovered after a period of time. Then, the HSS is required to process a lot of authorization change messages, and a load of the HSS is increased. Therefore, there is an urgent need in a solution for processing a temporary authorization change of a ProSe, to avoid impact of the authorization change of the ProSe on a network element such as the HSS and reduce a processing load of the network element such as the HSS.

The document 3GPP TS 23.303 V12.1.0 (2014-06-20) discloses the State 2 of the Proximity Service (ProSe) features in EPS.

### Summary of the Invention

In view of this, the embodiment of the present invention is intended to provide a method according to claim 1 for processing an authorization change of a ProSe, a system for processing an authorization change of a ProSe according to claim 9 and a second network element device according to claim 17, so as to at least solve the problem that a load of a network element such as an HSS is increased by impact of the authorization change of the ProSe on the network element such as the HSS. Further improvements and embodiments are provided in the dependent claims.

Also provided is a method for processing an authorization change of a ProSe, which includes that:
a ProSe Function of a visited network or a local network triggers reauthorization of the ProSe; and
the ProSe Function of the visited network or the local network sends updated authorization information to a ProSe Function of a home network, the updated authorization information includes: an update time limitation indication, and/or time information, and/or an authorization type.

In the solution, the update time limitation indication is arranged to indicate that an authorization update type of the home network is a temporary update or a permanent update.

In the solution, after the ProSe Function of the home network receives the updated authorization information, the method further includes that:
the ProSe Function of the home network notifies UE of the updated authorization information; or,
the ProSe Function of the home network sends an updated authorization notice to the UE to trigger the UE to initiate a service authorization request; or,
the ProSe Function of the home network notifies the UE of the updated authorization information after the UE initiates the service authorization request.

In the solution, the method further includes that:
the ProSe Function of the visited network or the local network receives the service authorization request initiated by the UE, and forwards the service authorization request to the ProSe Function of the home network;
the ProSe Function of the visited network or the local network receives a service authorization response for the service authorization request from the ProSe Function of the home network, and acquires the updated authorization information carried in the service authorization response; and
the ProSe Function of the visited network or the local network notifies the UE of the updated authorization information.

In the solution, the method further includes that:
the ProSe Function of the home network receives the service authorization request initiated by the UE, and notifies the UE of the updated authorization information.

In the solution, the method further includes that:
the ProSe Function of the home network receives the service authorization request initiated by the UE, and sends the service authorization request to the ProSe Function of the visited network or the local network; and
the ProSe Function of the visited network or the local network receives the service authorization request sent by the ProSe Function of the home network, and returns a service authorization response for the service authorization request to the ProSe Function of the home network, the updated authorization information is carried in the service authorization response.

In the solution, the method further includes that: the time information is set to be time information for temporary forbidding if the authorization update type is a temporary update; and
the time information includes: absolute time or relative time.

In the solution, an implementation manner for the update time limitation indication includes any one of manners as follows:
the update time limitation indication is implemented in a manner of adding a new Information Element (IE); and
the update time limitation indication is implemented in an implicit manner.

In the solution, implementation of the update time limitation indication in the implicit manner includes that:
if the time information is not carried, it is indicated that the update time limitation indication is arranged to indicate that the authorization update type of the home network is a permanent update; and
if the time information is carried, it is indicated that the update time limitation indication is arranged to indicate that the authorization update type of the home network is a temporary update and identify that the update is valid within a time period represented by the time information.

In the solution, the authorization type may include, but is not limited to: any one type of a full authorization, a conditional authorization and no authorization.

Also provided is a method for processing an authorization change of a ProSe, which includes that:
a ProSe Function of a home network receives updated authorization information sent by a ProSe Function of a visited network or a local network, the updated authorization information includes: an update time limitation indication, and/or time information, and/or an authorization type.

In the solution, the update time limitation indication is arranged to indicate that an authorization update type of the home network is a temporary update or a permanent update.

In the solution, the method further includes that:
the ProSe Function of the home network notifies UE of the updated authorization information; or,
the ProSe Function of the home network sends an updated authorization notice to the UE to trigger the UE to initiate a service authorization request; or,
the ProSe Function of the home network notifies the UE of the updated authorization information after the UE initiates the service authorization request.

In the solution, the method further includes that:
the ProSe Function of the home network receives a service authorization request sent by the ProSe Function of the visited network or the local network, and returns a service authorization response for the service authorization request to the ProSe Function of the visited network or the local network, the updated authorization information is carried in the service authorization response.

In the solution, the method further includes that:
the ProSe Function of the home network receives the service authorization request initiated by the UE, and notifies the UE of the updated authorization information.

In the solution, the method further includes that:
the ProSe Function of the home network receives the service authorization request initiated by the UE, and forwards the service authorization request to the ProSe Function of the visited network or the local network; and
the ProSe Function of the home network receives a service authorization response for the service authorization request returned by the ProSe Function of the visited network or the local network, the updated authorization information is carried in the service authorization response.

In the solution, the method further includes that:
the ProSe Function of the home network judges whether it is necessary to notify an HSS according to locally configured policy information.

In the solution, the method further includes that: the time information is time information for temporary forbidding if the authorization update type is a temporary update; and
the time information includes: absolute time or relative time.

In the solution, an implementation manner for the update time limitation indication includes any one of manners as follows:
the update time limitation indication is implemented in a manner of adding a new IE; and
the update time limitation indication is implemented in an implicit manner.

In the solution, implementation of the update time limitation indication in the implicit manner includes that:
if the time information is not carried, it is indicated that the update time limitation indication is arranged to indicate that the authorization update type of the home network is a permanent update; and
if the time information is carried, it is indicated that the update time limitation indication is arranged to indicate that the authorization update type of the home network is a temporary update and identify that the update is valid within a time period represented by the time information.

In the solution, the authorization type includes: any one type of a full authorization, a conditional authorization and no authorization.

Also provided is a first network element device, which includes:
a triggering unit, arranged for a ProSe Function of a visited network or a local network to trigger reauthorization of a ProSe; and
a sending unit, arranged for the ProSe Function of the visited network or the local network to send updated authorization information to a ProSe Function of a home network, herein the updated authorization information includes: an update time limitation indication, and/or time information, and/or an authorization type.

In the solution, the update time limitation indication is arranged to indicate that an authorization update type of the home network is a temporary update or a permanent update.

In the solution, the first network element device further includes:
an update notification unit, arranged for the ProSe Function of the home network to notify UE of the updated authorization information; or, for the ProSe Function of the home network to send an updated authorization notice to the UE to trigger the UE to initiate a service authorization request; or, for the ProSe Function of the home network to notify the UE of the updated authorization information after the UE initiates the service authorization request.

In the solution, the sending unit is further arranged for the ProSe Function of the visited network or the local network to receive the service authorization request initiated by the UE, and forward the service authorization request to the ProSe Function of the home network; for the ProSe Function of the visited network or the local network to receive a service authorization response for the service authorization request from the ProSe Function of the home network, and acquire the updated authorization information carried in the service authorization response; and for the ProSe Function of the visited network or the local network to notify the UE of the updated authorization information.

In the solution, the first network element device further includes:
a notification unit, arranged for the ProSe Function of the home network to receive the service authorization request initiated by the UE, and notify the UE of the updated authorization information.

In the solution, the sending unit may further be arranged to send the service authorization request to the ProSe Function of the visited network or the local network; and
a receiving unit is arranged for the ProSe Function of the visited network or the local network to receive the service authorization request sent by the ProSe Function of the home network, and return a service authorization response for the service authorization request to the ProSe Function of the home network, the updated authorization information is carried in the service authorization response.

In the solution, the time information may be set to be time information for temporary forbidding if the authorization update type is a temporary update; and
the time information includes: absolute time or relative time.

In the solution, an implementation manner for the update time limitation indication includes any one of manners as follows:
the update time limitation indication is implemented in a manner of adding a new IE; and
the update time limitation indication is implemented in an implicit manner.

In the solution, implementation of the update time limitation indication in the implicit manner includes that:
if the time information is not carried, it is indicated that the update time limitation indication is arranged to indicate that the authorization update type of the home network is a permanent update; and
if the time information is carried, it is indicated that the update time limitation indication is arranged to indicate that the authorization update type of the home network is a temporary update and identify that the update is valid within a time period represented by the time information.

In the solution, the authorization type includes: any one type of a full authorization, a conditional authorization and no authorization.

When executing processing, the triggering unit, the sending unit, the update notification unit, the notification unit and the receiving unit may be implemented by adopting a Central Processing Unit (CPU), a Digital Signal Processor (DSP) or a Field-Programmable Gate Array (FPGA).

Also provided is a second network element device, which includes:
a receiving unit, arranged for a ProSe Function of a home network to receive updated authorization information sent by a ProSe Function of a visited network or a local network, herein the updated authorization information includes: an update time limitation indication, and/or time information, and/or an authorization type.

In the solution, the update time limitation indication is arranged to indicate that an authorization update type of the home network is a temporary update or a permanent update.

In the solution, a notification unit is arranged for the ProSe Function of the home network to notify UE of the updated authorization information; or, for the ProSe Function of the home network to send an updated authorization notice to the UE to trigger the UE to initiate a service authorization request; or, for the ProSe Function of the home network to notify the UE of the updated authorization information after the UE initiates the service authorization request.

In the solution, the receiving unit is further arranged for the ProSe Function of the home network to receive a service authorization request sent by the ProSe Function of the visited network or the local network, and return a service authorization response for the service authorization request to the ProSe Function of the visited network or the local network, the updated authorization information is carried in the service authorization response.

In the solution, the receiving unit is further arranged for the ProSe Function of the home network to receive the service authorization request initiated by the UE, and notify the UE of the updated authorization information.

In the solution, the receiving unit is further arranged for the ProSe Function of the home network to, after forwarding the service authorization request to the ProSe Function of the visited network or the local network, receive a service authorization response for the service authorization request returned by the ProSe Function of the visited network or the local network, the updated authorization information is carried in the service authorization response.

In the solution, the second network element device further includes:
a judgment unit, arranged for the ProSe Function of the home network to judge whether it is necessary to notify an HSS according to locally configured policy information.

In the solution, the time information is time information for temporary forbidding if the authorization update type is a temporary update; and
the time information includes: absolute time or relative time.

In the solution, an implementation manner for the update time limitation indication includes any one of manners as follows:
the update time limitation indication is implemented in a manner of adding a new IE; and
the update time limitation indication is implemented in an implicit manner.

In the solution, implementation of the update time limitation indication in the implicit manner includes that:
if the time information is not carried, it is indicated that the update time limitation indication is arranged to indicate that the authorization update type of the home network is a permanent update; and
if the time information is carried, it is indicated that the update time limitation indication is arranged to indicate that the authorization update type of the home network is a temporary update and identify that the update is valid within a time period represented by the time information.

In the solution, the authorization type includes: any one type of a full authorization, a conditional authorization and no authorization.

When executing processing, the receiving unit, the notification unit and the judgment unit may be implemented by adopting a CPU, a DSP or an FPGA.

Also provided is a method for processing an authorization change of a ProSe, which includes that:
a ProSe Function of a home network is triggered to request an HSS for acquiring subscription data when UE initiates a service authorization request or a service request; and
the ProSe Function of the home network acquires the subscription data, the subscription data includes time limitation information of an authorization.

In the solution, the method further includes that:
an MME is triggered to acquire the subscription data from the HSS in an attachment or location updating process by the UE,
the subscription data returned by the HSS includes the time limitation information of the authorization.

In the solution, the time limitation information of the authorization includes absolute time or relative time.

In the solution, when the time limitation information of the authorization in the subscription data changes, the HSS notifies the ProSe Function of the home network or the MME of updated subscription data.

In the solution, when the time limitation information of the authorization is timed out, the ProSe Function of the home network notifies the UE that the authorization has expired; or,
when the time limitation information of the authorization changes, the ProSe Function of the home network may notify the UE of updated authorization information, or trigger the UE to initiate a service authorization request, or notify the UE of the updated authorization information after the UE initiates the service authorization request.

In the solution, when the time limitation information of the authorization is timed out, the MME notifies that authorization information of a wireless network element terminal changes.

Also provided is a third network element device, which includes:
a triggering unit, arranged to trigger a ProSe Function of a home network to request an HSS for acquiring subscription data when UE initiates a service authorization request or a service request; and
an acquisition unit, arranged for the ProSe Function of the home network to acquire the subscription data, wherein the subscription data includes time limitation information of an authorization.

In the solution, the triggering unit is further arranged for the UE to trigger an MME to acquire the subscription data from the HSS in an attachment or location updating process; and
the acquisition unit is further arranged to include the time limitation information of the authorization in the subscription data returned by the HSS.

In the solution, the time limitation information of the authorization includes absolute time or relative time.

In the solution, the network element device further includes:
a first notification unit, arranged for the HSS to, when the time limitation information of the authorization in the subscription data changes, notify the ProSe Function of the home network or the MME of updated subscription data.

In the solution, the network element device further includes:
a second notification unit, arranged for the ProSe Function of the home network to, when the time limitation information of the authorization is timed out, notify the UE that the authorization has expired; or,
for the ProSe Function of the home network to, when the time limitation information of the authorization changes, notify the UE of updated authorization information, or trigger the UE to initiate a service authorization request, or notify the UE of the updated authorization information after the UE initiates the service authorization request.

In the solution, the network element device further includes:
a third notification unit, arranged for the MME to, when the time limitation information of the authorization is timed out, notify that authorization information of a wireless network element changes.

When executing processing, the triggering unit, the acquisition unit, the first notification unit, the second notification unit and the third notification unit may be implemented by adopting a CPU, a DSP or an FPGA.

According to the method for processing the authorization change of the ProSe in the embodiment of the present invention, the method includes that: the ProSe Function of the visited network or the local network triggers reauthorization of the ProSe; and the ProSe Function of the visited network or the local network sends the updated authorization information to the ProSe Function of the home network, the updated authorization information includes the update time limitation indication, and/or the time information, and/or the authorization type. By the embodiment of the present invention, processing is implemented without the HSS, so that the problem that a load of a network element such as the HSS is increased by impact of the authorization change of the ProSe on the network element such as the HSS is solved.

### Brief Description of Drawings

FIG. 1 is a structure diagram of main network elements of a system with a ProSe function being introduced according to a conventional art;
FIG. 2 is a flowchart of notification of an authorization change of a ProSe according to the conventional art;
FIG. 3 is a principle flowchart of implementation of an authorization change of a ProSe according to an embodiment of the present invention;
FIG. 4 is a structure diagram of a first network element device according to an embodiment of the present invention;
FIG. 5 is a schematic diagram of a first notification flow of an authorization change of a ProSe according to an embodiment of the present invention;
FIG. 6 is a schematic diagram of a second notification flow of an authorization change of a ProSe according to an embodiment of the present invention; and
FIG. 7 is a schematic diagram of addition of time limitation information of an authorization into subscription data of a ProSe according to an embodiment of the present invention.

### Specific Embodiments

Implementation of the technical solutions will be further described below with reference to the drawings in detail.

In order to make a purpose, technical solutions and advantages of the present invention clearer, the present invention will be further described below with reference to the drawings in detail.

The present invention provides a solution for processing a temporary authorization change of a ProSe, which may solve the problem that a load of a network element such as an HSS is increased by impact of the authorization change of the ProSe on the network element such as the HSS and reduce the processing load of the network element such as the HSS.

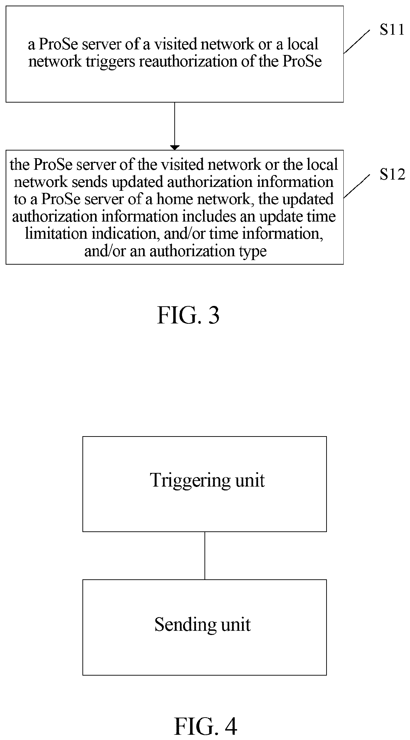

A method for processing an authorization change of a ProSe, as shown in FIG. 3, includes the following steps.

In Step S11, a ProSe Function of a visited network or a local network triggers reauthorization of the ProSe.

In Step S12, the ProSe Function of the visited network or the local network sends updated authorization information to a ProSe Function of a home network, the updated authorization information includes an update time limitation indication, and/or time information, and/or an authorization type.

By Step S11 to Step S12, the ProSe Function of the home network may notify the UE of the updated authorization information, or send an updated authorization notice to UE to trigger the UE to initiate a service authorization request; or, the ProSe Function of the home network sends the updated authorization notice to the UE to notify the UE of the updated authorization information after the UE initiates the service authorization request.

A first network element device, as shown in FIG. 4, includes:
a triggering unit, arranged for a ProSe Function of a visited network or a local network to trigger reauthorization of the ProSe; and
a sending unit, arranged for the ProSe Function of the visited network or the local network to send updated authorization information to a ProSe Function of a home network, herein the updated authorization information includes an update time limitation indication, and/or time information, and/or an authorization type.

A method for processing an authorization change of a ProSe includes:
Step S21, a ProSe Function of a home network receives updated authorization information sent by a ProSe Function of a visited network or a local network, the updated authorization information includes an update time limitation indication, and/or time information, and/or an authorization type.

After Step S21, the method further includes:
Step S21, the ProSe Function of the home network notifies UE of the updated authorization information; or, the ProSe Function of the home network sends an updated authorization notice to the UE to trigger the UE to initiate a service authorization request; or, the ProSe Function of the home network notifies the UE of the updated authorization information after the UE initiates the service authorization request.

A second network element device includes:
a receiving unit, arranged for a ProSe Function of a home network to receive updated authorization information sent by a ProSe Function of a visited network or a local network, herein the updated authorization information includes an update time limitation indication, and/or time information, and/or an authorization type.

The second network element device further includes:
a notification unit, arranged for the ProSe Function of the home network to notify UE of the updated authorization information; or, for the ProSe Function of the home network to send an updated authorization notice to the UE to trigger the UE to initiate a service authorization request; or, for the ProSe Function of the home network to notify the UE of the updated authorization information after the UE initiates the service authorization request.

A method for processing an authorization change of a ProSe includes the following steps.

In Step S31, a ProSe Function of a home network is triggered to request an HSS for acquiring subscription data when UE initiates a service authorization request or a service request.

In Step S32, the ProSe Function of the home network acquires the subscription data, the subscription data includes time limitation information of an authorization.

A third network element device includes:
a triggering unit, arranged to trigger a ProSe Function of a home network to request an HSS for acquiring subscription data when UE initiates a service authorization request or a service request; and
an acquisition unit, arranged for the ProSe Function of the home network to acquire the subscription data, the subscription data including time limitation information of an authorization.

The present invention will be elaborated below with embodiments of specific application scenarios.

### Embodiment 1

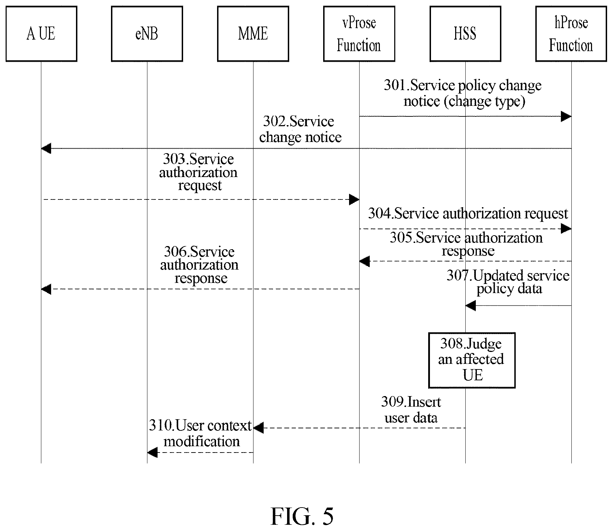

An example of a notification flow of a temporary authorization change of a ProSe, as shown in FIG. 5, includes the following steps.

In Step 301, due to an authorization change of a ProSe, a visited network or a local network triggers reauthorization of the ProSe, and the visited network or the local network initiates a service policy change notice to a home network of UE, herein the authorization change may be temporary.

Here, the service policy change notice message may be initiated for a specific UE, may also be initiated for all UEs in a PLMN, the former is required to carry IMSI information of the UE, and the latter is required to indicate a PLMN of which UE is required to be reauthorized, i.e. a HPLMN ID of the home network of the UE.

Here, the service policy change notice message further carries an ID of a PLMN receiving a policy change, i.e. the PLMN initiating reauthorization, and service policy changes, for example, a communication and/or discovery process requires reauthorization.

Here, the service policy change notice message may further carry an authorization update type, and an update time limitation indication specifically indicates the home network authorization update type, i.e. whether the authorization change is a permanent update or a temporary update.

In case of a temporary update, time information for temporary forbidding may further be provided. The time information may be absolute time, and may also be relative time.

The above update time limitation indication may be implemented by adding a new IE, or may be implemented in an implicit manner. For example, if the time information is not carried, it is a permanent update, and if the time information is carried, it is identified that the update is valid within a time period represented by the time information.

The service policy change notice message may further carry an authorization type, for example, any one of a full authorization, a conditional authorization and no authorization.

In Step 302, after receiving the service policy change notice, a ProSe Function of the home network initiates a notice to the affected UE or notifies the UE of the service change when the UE initiates a service authorization request next time.

Here, if the IMSI is not carried in Step 301, the ProSe Function may be required to send multiple messages to the related UE.

Here, a manner for notifying the UE may be directly notifying the UE of a specific content of the updated authorization change, or only notifying the UE of authorization updating to trigger the UE to reinitiate an authorization request process to obtain the specific updated content, that is, Steps 303-306 are executed.

Here, if the authorization update type and/or the time information and/or the authorization type are carried in Step 301, the ProSe Function of the home network may notify the UE of the above information.

Or, the above information is not sent, and the UE is only notified that it is necessary to initiate reauthorization of the ProSe and acquire updated authorization information in subsequent Steps 303-306. In order to reduce message interaction, a direct notification manner (that is, Steps 303-306 are not executed) is recommended under a condition that access is forbidden. For a conditional authorization, a manner of notifying the UE to reacquire the authorization information (that is, Steps 303∼306 are executed) may be selected.

In Steps 303∼306, after receiving a reauthorization notice, the UE reinitiates a service authorization request to a ProSe Function of the visited network, and the ProSe Function of the visited network or the local network sends the authorization request to the ProSe Function of the home network. The ProSe Function of the home network returns an authorization request response carrying updated authorization information of the UE to the ProSe Function of the visited network or the local network. The ProSe Function of the visited network or the local network returns a final service authorization response carrying the updated authorization update type and/or time information and/or authorization type in Step 301 to the UE according to a local policy.

In Steps 307∼308, the ProSe Function of the home network sends updated service policy data carrying changed ProSe service data to an HSS.

Here, if the IMSI is carried in Step 301, the IMSI is required to be carried in Step 307. If the IMSI is not carried, the ProSe Function of the home network may check the affected UE and send multiple messages to the HSS for the affected UE. Or the ProSe Function of the home network sends only one message carrying the changed PLMN identification, and the HSS checks the affected UE in Step 309.

Here, if the authorization update type and the time information are carried in Step 301, the ProSe of the home network may judge whether it is necessary to notify the HSS according to locally configured policy information. For example, temporary authorization withdrawing may not be notified to the HSS, or the authorization update type and the time information are carried in the message for notifying the HSS in Step 307. The message may further carry the authorization type, for example, one of a full authorization, a conditional authorization and no authorization.

If the message does not carry the IMSI, the HSS is required to judge the UE which may be affected according to the ID of the PLMN requiring reauthorization, and update its subscription data.

In Steps 309∼310, for the affected UE, the HSS may judge to reinsert user data into a MME where the UE is registered according to a registration state of the UE. The MME judges a policy change type, and if a broadcast policy of the UE changes and an S1 bearer is created for the UE, the MME is required to notify that authorization information of the ProSe changes through a user context modification message.

If the authorization update type and the time information are carried in Step 307, the authorization update type and the time information may also be included in the subscription data inserted by the HSS.

### Embodiment 2

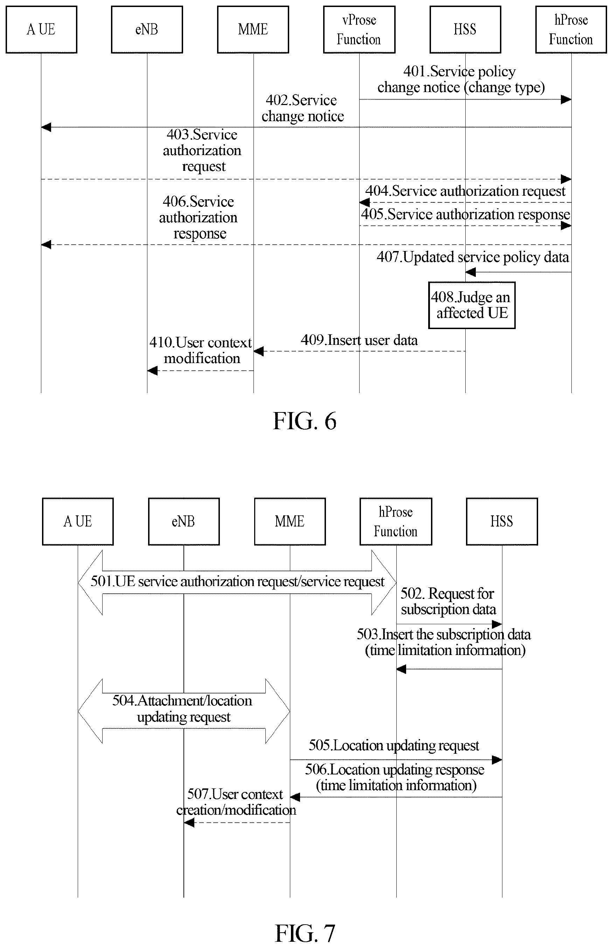

An example of a second notification flow of an authorization change of a ProSe, as shown in FIG. 6, includes the following steps.

In Step 401, due to an authorization change of a ProSe, a visited network or a local network triggers reauthorization of the ProSe, and the visited network or the local network initiates a service policy change notice to a home network of UE, herein the authorization change may be temporary.

Here, the service policy change notice message may be initiated for a specific UE, may also be initiated for all UEs in a PLMN, the former is required to carry IMSI information of the UE, and the latter is required to indicate a PLMN of which UE is required to be reauthorized, i.e. a HPLMN ID of the home network of the UE.

Here, the service policy change notice further carries an ID of a PLMN receiving a policy change, i.e. the PLMN initiating reauthorization, and service policy changes, for example, a communication and/or discovery process requires reauthorization.

Here, the service policy change notice message may further carry an authorization update type, and an update time limitation indication specifically indicates the home network authorization update type, i.e. whether the authorization change is a permanent update or a temporary update.

In case of a temporary update, time information for temporary forbidding may further be provided. The time information may be absolute time, and may also be relative time.

The above update time limitation indication may be implemented by adding a new IE, or may be implemented in an implicit manner. For example, if the time information is not carried, it is a permanent update, and if the time information is carried, it is identified that the update is valid within a time period represented by the time information.

The service policy change notice message may further carry an authorization type, for example, any one of a full authorization, a conditional authorization and no authorization.

In Step 402, after receiving the service policy change notice, a ProSe Function of the home network initiates a notice to the affected UE or notifies the UE of the service change when the UE initiates a service authorization request next time.

Here, if the IMSI is not carried in Step 401, the ProSe Function may be required to send multiple messages to the related UE.

Here, a manner for notifying the UE may be directly notifying the UE of a specific content of the updated authorization change, or only notifying the UE of authorization updating to trigger the UE to reinitiate an authorization request process to obtain the specific updated content, that is, Steps 403-406 are executed.

Here, if the authorization update type and/or the time information and/or the authorization type are carried in Step 401, the ProSe Function of the home network may notify the UE of the above information.

Or, the above information is not sent, and the UE is only notified that it is necessary to initiate reauthorization of the ProSe and acquire updated authorization information in subsequent Steps 403-406. In order to reduce message interaction, a direct notification manner (that is, Steps 403-406 are not executed) is recommended under a condition that access is forbidden. For a conditional authorization, a manner of notifying the UE to reacquire the authorization information (that is, Steps 403-406 are executed) may be selected.

In Steps 403∼406, after receiving a reauthorization notice, the UE reinitiates a service authorization request to the ProSe Function of the home network. Optionally, the ProSe Function of the home network sends the authorization request to the ProSe Function of the visited network or the local network, and the ProSe Function of the visited network or the local network returns an authorization request response carrying updated authorization information of the UE to the ProSe Function of the home network. Since the home network has acquired the latest information in Step 401, so that Steps 404-405 are optional. The ProSe Function of the home network returns a final service authorization response carrying the updated authorization update type and/or time information and/or authorization type in Step 401 to the UE according to a local policy.

In Steps 407∼408, the ProSe Function of the home network sends updated service policy data carrying changed ProSe service data to an HSS.

Here, if the IMSI is carried in Step 401, the IMSI is required to be carried in Step 407. If the IMSI is not carried, the ProSe Function of the home network may check the affected UE and send multiple messages to the HSS for the affected UE. Or the ProSe Function of the home network sends only one message carrying the changed PLMN identification, and the HSS checks the affected UE in Step 409.

Here, if the authorization update type and the time information are carried in Step 401, the ProSe of the home network may judge whether it is necessary to notify the HSS according to locally configured policy information. For example, temporary authorization withdrawing may not be notified to the HSS, or the authorization update type and the time information are carried in the message for notifying the HSS in Step 407. The message may further carry the authorization type, for example, one of a full authorization, a conditional authorization and no authorization.

If the message does not carry the IMSI, the HSS is required to judge the UE which may be affected according to the ID of the PLMN requiring reauthorization, and update its subscription data.

In Steps 409∼410, for the affected UE, the HSS may judge to reinsert user data into an MME where the UE is registered according to a registration state of the UE. The MME judges a policy change type, and if a broadcast policy of the UE changes and an S1 bearer is created for the UE, the MME is required to notify that authorization information of the ProSe changes through a user context modification message.

If the authorization update type and the time information are carried in Step 407, the authorization update type and the time information may also be included in the subscription data inserted by the HSS.

### Embodiment 3

An example of addition of time limitation information of an authorization into subscription data of a ProSe, as shown in FIG. 7, includes the following steps.

In Step 501, a ProSe Function of a home network may be triggered to acquire subscription data from an HSS in a process of requesting for a service authorization or requesting for a service (broadcast and monitoring) and the like by UE.

In Steps 502∼503, the acquired subscription data may include time limitation information of an authorization for some service (i.e. communication and/or discovery) corresponding to a PLMN, and the time may be absolute time, and may also be relative time.

When finding that an authorization time limitation of certain UE is exceeded, the ProSe Function of the home network may notify the related UE.

In Step 504, a MME may be triggered to acquire the subscription data from the HSS in an attachment or location updating process by the UE.

In Steps 505∼506, the MME initiates a location updating request to the HSS to acquire the subscription data, and the HSS returns a location updating response carrying the subscription data of a user, which may include the time limitation information of the authorization for some service (such as communication and/or discovery), herein the time may be absolute time, and may also be relative time.

If an authorization time limitation of a broadcast policy of the UE is exceeded, for example, permission is changed into forbidding after a certain time and an S 1 bearer is created for the UE, the MME may notify that authorization information of the ProSe changes through a user context modification message, and withdraw a response resource.

With addition of the time limitation information into the subscription data, when the time limitation information changes, the HSS is required to notify the ProSe Function of the home network and the MME through the updated subscription data. If the authorization is timed out and the S1 bearer is created for the UE, the MME is required to notify that the authorization information of the ProSe changes through the user context modification message.

If being implemented in form of software function module and sold or used as an independent product, the integrated module in the embodiment of the present invention may also be stored in a computer-readable storage medium. Based on such an understanding, the technical solution of the embodiment of the present invention substantially or a part with contributions to the conventional art may be embodied in form of software product, and the computer software product is stored in a storage medium, including a plurality of instructions arranged to enable a computer (which may be a personal computer, a server, network device or the like) to execute all or part of the method in each embodiment of the present invention. The preceding storage medium includes: various media capable of storing program codes such as a U disk, a mobile hard disk, a Read-Only Memory (ROM), a Random Access Memory (RAM), a magnetic disk or a compact disc. Therefore, the embodiment of the present invention is not limited to any specific hardware and software combination.

Correspondingly, the embodiment of the present invention further provides a computer storage medium, in which a computer program is stored, the computer program is arranged to execute a method for processing an authorization change of a ProSe in the embodiment of the present invention.

The above is only the preferred embodiment of the present invention and not intended to limit the scope of protection of the present invention.

### Industrial Applicability

According to the method for processing the authorization change of the ProSe in the embodiment of the present invention, the method includes that: the ProSe Function of the visited network or the local network triggers reauthorization of the ProSe; and the ProSe Function of the visited network or the local network sends the updated authorization information to the ProSe Function of the home network, the updated authorization information includes the update time limitation indication, and/or the time information, and/or the authorization type. By the embodiment of the present invention, processing is implemented without the HSS, so that the problem that a load of a network element such as the HSS is increased by impact of the authorization change of the ProSe on the network element such as the HSS is solved.

## Claims

1. A method for processing an authorization change of a Proximity-based Service, ProSe, **characterized by** comprising:
triggering, by a ProSe Function of a visited network or a local network, reauthorization of the ProSe (S11); and
sending, by the ProSe Function of the visited network or the local network, updated authorization information to a ProSe Function of a home network (S12), wherein the updated authorization information comprises: an update time limitation indication; or the updated authorization information comprises: an update time limitation indication, and time information;
wherein the update time limitation indication is arranged to indicate whether the authorization change of the ProSe is a temporary update or a permanent update.

2. The method according to claim 1,
wherein the method further comprises: setting the time information to be time information for temporary forbidding if the authorization change of the ProSe is a temporary update, wherein the time information comprises: absolute time or relative time.

3. The method according to claim 1, wherein after the ProSe Function of the home network receives the updated authorization information, the method further comprises:
notifying, by the ProSe Function of the home network, User Equipment, UE, of the updated authorization information; or,
sending, by the ProSe Function of the home network, an updated authorization notice to the UE to trigger the UE to initiate a service authorization request; or,
notifying, by the ProSe Function of the home network, the UE of the updated authorization information after the UE initiates the service authorization request.

4. The method according to claim 1, wherein the method further comprises:
receiving, by the ProSe Function of the visited network or the local network, the service authorization request initiated by the UE, and forwarding the service authorization request to the ProSe Function of the home network;
receiving, by the ProSe Function of the visited network or the local network, a service authorization response for the service authorization request from the ProSe Function of the home network, and acquiring the updated authorization information carried in the service authorization response; and
notifying, by the ProSe Function of the visited network or the local network, the UE of the updated authorization information.

5. The method according to claim 1, wherein the method further comprises:
receiving, by the ProSe Function of the home network, the service authorization request initiated by the UE, and notifying the UE of the updated authorization information,
and,
wherein the method further comprises:
receiving, by the ProSe Function of the home network, the service authorization request initiated by the UE, and sending the service authorization request to the ProSe Function of the visited network or the local network; and
receiving, by the ProSe Function of the visited network or the local network, the service authorization request sent by the ProSe Function of the home network, and returning a service authorization response for the service authorization request to the ProSe Function of the home network, wherein the updated authorization information is carried in the service authorization response.

6. The method according to any one of claims 1-5, wherein an implementation manner for the update time limitation indication comprises any one of manners as follows:
the update time limitation indication is implemented in a manner of adding a new Information Element, IE; and
the update time limitation indication is implemented in an implicit manner,
and,
wherein implementation of the update time limitation indication in the implicit manner comprises that:
if the time information is not carried, it is indicated that the update time limitation indication is arranged to indicate that the authorization change of the ProSe is a permanent update; and
if the time information is carried, it is indicated that the update time limitation indication is arranged to indicate that the authorization change of the ProSe is a temporary update and identify that the update is valid within a time period represented by the time information.

7. The method according to any one of claims 1-5, wherein the updated authorization information further comprises an authorization type; the authorization type comprises: any one type of a full authorization, a conditional authorization and no authorization.

8. The method according to claim 1, further comprising:
obtaining, by a ProSe Function of a home network or a Mobility Management Element, MME, of a visited network, authorization information from a Home Subscriber Server, HSS, wherein the authorization information comprises: an update time limitation indication, and/or time information, and/or an authorization type

9. A system for processing an authorization change of a Proximity-based Service, ProSe, **characterized by** comprising: a first network element device for configuring a ProSe function of a visited network or a local network and a second network element device for configuring a ProSe function of a home network;
wherein , the first network element device comprises:
a triggering unit, arranged to trigger reauthorization of the ProSe; and
a sending unit, arranged to send updated authorization information to the second network element device, wherein the updated authorization information comprises: an update time limitation indication; or the updated authorization information comprises: an update time limitation indication, and time information;
wherein the update time limitation indication is arranged to indicate whether the authorization change of the ProSe is a temporary update or a permanent update.

10. The system according to claim 9,
wherein the time information is set to be time information for temporary forbidding if the authorization change of the ProSe is a temporary update; and
the time information comprises: absolute time or relative time.

11. The system according to claim 9, wherein the second network element device comprises:
an update notification unit, arranged to notify User Equipment, UE, of the updated authorization information; or, to send an updated authorization notice to the UE to trigger the UE to initiate a service authorization request; or, to notify the UE of the updated authorization information after the UE initiates the service authorization request.

12. The system according to claim 9, wherein the sending unit of the first network element device is further arranged to receive the service authorization request initiated by the UE, and forward the service authorization request to the second network element device; to receive a service authorization response for the service authorization request from the second network element device, and acquire the updated authorization information carried in the service authorization response; and to notify the UE of the updated authorization information.

13. The system according to claim 9, wherein the second network element device comprises: a notification unit and a sending unit;
wherein, the notification unit is arranged to receive the service authorization request initiated by the UE, and notify the UE of the updated authorization information,
the sending unit of the second network element device is arranged to send the service authorization request to the first network element device; and
the first network element device further comprises: a receiving unit, arranged to receive the service authorization request sent by the second network element device, and return a service authorization response for the service authorization request to the second network element device, wherein the updated authorization information is carried in the service authorization response.

14. The system according to any one of claims 9-13, wherein an implementation manner for the update time limitation indication comprises any one of manners as follows:
the update time limitation indication is implemented in a manner of adding a new Information Element, IE; and
the update time limitation indication is implemented in an implicit manner, and,
wherein implementation of the update time limitation indication in the implicit manner comprises that:
if the time information is not carried, it is indicated that the update time limitation indication is arranged to indicate that the authorization change of the ProSe is a permanent update; and
if the time information is carried, it is indicated that the update time limitation indication is arranged to indicate that the authorization change of the ProSe is a temporary update and identify that the update is valid within a time period represented by the time information.

15. The system according to any one of claims 9-13, wherein the updated authorization information further comprises an authorization type; the authorization type comprises: any one type of a full authorization, a conditional authorization and no authorization.

16. The system according to claim 9, wherein the second network element device comprises:
an acquisition unit, arranged to obtain authorization information from a Home Subscriber Server, HSS, wherein the authorization information comprises: an update time limitation indication, and/or time information, and/or an authorization type;
or, wherein the system further comprises a third network element device for configuring an Mobility Management Element, MME, of a visited network; wherein the third network element device comprises an acquisition unit, arranged to obtain authorization information from a Home Subscriber Server, HSS, wherein the authorization information comprises: an update time limitation indication, and/or time information, and/or an authorization type.

17. A second network element device, **characterized by** comprising:
a receiving unit, arranged for a Proximity-based Service, ProSe, Function of a home network to receive updated authorization information sent by a ProSe Function of a visited network or a local network, wherein the updated authorization information comprises: an update time limitation indication; or the updated authorization information comprises: an update time limitation indication, and time information;
wherein the update time limitation indication is arranged to indicate whether an authorization change of the ProSe is a temporary update or a permanent update.

18. The second network element device according to claim 17,
wherein the time information is time information for temporary forbidding if the authorization change of the ProSe is a temporary update; and
the time information comprises: absolute time or relative time.

19. The second network element device according to claim 17, wherein a notification unit is arranged for the ProSe Function of the home network to notify User Equipment, UE, of the updated authorization information; or, for the ProSe Function of the home network to send an updated authorization notice to the UE to trigger the UE to initiate a service authorization request; or, for the ProSe Function of the home network to notify the UE of the updated authorization information after the UE initiates the service authorization request.

20. The second network element device according to claim 17, wherein the receiving unit is further arranged for the ProSe Function of the home network to receive a service authorization request sent by the ProSe Function of the visited network or the local network, and return a service authorization response for the service authorization request to the ProSe Function of the visited network or the local network, wherein the updated authorization information is carried in the service authorization response.

21. The second network element device according to claim 17, wherein the receiving unit is further arranged for the ProSe Function of the home network to receive the service authorization request initiated by the UE, and notify the UE of the updated authorization information,
and,
wherein the receiving unit is further arranged for the ProSe Function of the home network to, after forwarding the service authorization request to the ProSe Function of the visited network or the local network, receive a service authorization response for the service authorization request returned by the ProSe Function of the visited network or the local network, wherein the updated authorization information is carried in the service authorization response,
and,
the second network element device further comprises:
a judgment unit, arranged for the ProSe Function of the home network to judge whether it is necessary to notify a Home Subscriber Server, HSS, according to locally configured policy information.

22. The second network element device according to any one of claims 17-21, wherein an implementation manner for the update time limitation indication comprises any one of manners as follows:
the update time limitation indication is implemented in a manner of adding a new Information Element, IE; and
the update time limitation indication is implemented in an implicit manner,
and,
wherein implementation of the update time limitation indication in the implicit manner comprises that:
if the time information is not carried, it is indicated that the update time limitation indication is arranged to indicate that the authorization change of the ProSe is a permanent update; and
if the time information is carried, it is indicated that the update time limitation indication is arranged to indicate that the authorization change of the ProSe is a temporary update and identify that the update is valid within a time period represented by the time information.

23. The second network element device according to any one of claims 17-21, wherein the updated authorization information further comprises an authorization type; the authorization type comprises: any one type of a full authorization, a conditional authorization and no authorization.

## Patentansprüche

1. Verfahren zur Verarbeitung einer Autorisierungsänderung eines auf Nähe basierten Dienstes, ProSe, **gekennzeichnet durch** umfassend:
Veranlassen, durch eine ProSe-Funktion eines besuchten Netzwerks oder eines lokalen Netzwerks, einer erneuten Autorisierung des ProSe (S11); und
Senden, durch die ProSe-Funktion des besuchten Netzwerks oder des lokalen Netzwerks, aktualisierter Autorisierungsinformationen an eine ProSe-Funktion eines Heimnetzwerks (S12), wobei die aktualisierten Autorisierungsinformationen umfassen: eine Aktualisierungszeitbegrenzungsangabe; oder die aktualisierten Autorisierungsinformationen umfassen: eine Aktualisierungszeitbegrenzungsangabe, und Zeitinformationen;
wobei die Aktualisierungszeitbegrenzungsangabe angeordnet ist, um anzugeben, ob die Autorisierungsänderung des ProSe eine vorübergehende Aktualisierung oder eine dauerhafte Aktualisierung ist.

2. Verfahren nach Anspruch 1,
wobei das Verfahren ferner umfasst: Einstellen der Zeitinformationen als Zeitinformationen für vorübergehendes Untersagen, wenn die Autorisierungsänderung des ProSe eine vorübergehende Aktualisierung ist, wobei die Zeitinformationen umfassen: absolute Zeit oder relative Zeit.

3. Verfahren nach Anspruch 1, wobei, nachdem die ProSe-Funktion des Heimnetzwerks die aktualisierten Autorisierungsinformationen empfangen hat, das Verfahren ferner umfasst:
Benachrichtigen, durch die ProSe-Funktion des Heimnetzwerks, des Benutzergeräts, UE, über die aktualisierten Autorisierungsinformationen; oder,
Senden, durch die ProSe-Funktion des Heimnetzwerks, einer aktualisierten Autorisierungsbenachrichtigung an das UE, um das UE zu veranlassen, eine Dienstautorisierungsanforderung zu initiieren; oder,
Benachrichtigen, durch die ProSe-Funktion des Heimnetzwerks, des UEs über die aktualisierte Autorisierungsinformationen, nachdem das UE die Dienstautorisierungsanforderung initiiert hat.

4. Verfahren nach Anspruch 1, wobei das Verfahren ferner umfasst:
Empfangen, durch die ProSe-Funktion des besuchten Netzwerks oder des lokalen Netzwerks, der von dem UE initiierten Dienstautorisierungsanforderung und Weiterleiten der Dienstautorisierungsanforderung an die ProSe-Funktion des Heimnetzwerks;
Empfangen, durch die ProSe-Funktion des besuchten Netzwerks oder des lokalen Netzwerks, einer Dienstautorisierungsantwort für die Dienstautorisierungsanforderung von der ProSe-Funktion des Heimnetzwerks, und Erfassen der aktualisierten Autorisierungsinformationen, die in der Dienstautorisierungsantwort getragen werden; und
Benachrichtigen, durch die ProSe-Funktion des besuchten Netzwerks oder des lokalen Netzwerks, des UEs über die aktualisierte Autorisierungsinformationen.

5. Verfahren nach Anspruch 1, wobei das Verfahren ferner umfasst:
Empfangen, durch die ProSe-Funktion des Heimnetzwerks, der Dienstautorisierungsanforderung, die von dem UE initiiert wurde und Benachrichtigen des UEs über die aktualisierte Autorisierungsinformationen,
and,
wobei das Verfahren ferner umfasst:
Empfangen, durch die ProSe-Funktion des Heimnetzwerks, der von dem UE initiierten Dienstautorisierungsanforderung und Senden der Dienstautorisierungsanforderung an die ProSe-Funktion des besuchten Netzwerks oder des lokalen Netzwerks; und
Empfangen, durch die ProSe-Funktion des besuchten Netzwerks oder des lokalen Netzwerks, einer Dienstautorisierungsantforderung, die von der ProSe-Funktion des Heimnetzwerks gesendet wurde, und Zurückgeben einer Dienstautorisierungsantwort für die Dienstautorisierungsanforderung an die ProSe-Funktion des Heimnetzwerks, wobei die aktualisierten Autorisierungsinformationen, in der Dienstautorisierungsantwort getragen werden.

6. Verfahren nach einem der Ansprüche 1 bis 5, wobei eine Implementierungsart für die Aktualisierungszeitbegrenzungsangabe eine der Arten wie folgt umfasst:
die Aktualisierungszeitbegrenzungsangabe wird so implementiert, dass ein neues Informationselement, IE, hinzugefügt wird; und
die Aktualisierungszeitbegrenzungsangabe wird in einer impliziten Weise implementiert,
und,
wobei Implementierung der Aktualisierungszeitbegrenzungsangabe in der impliziten Weise umfasst, dass:
wenn die Zeitinformationen nicht getragen werden, angezeigt wird, dass die Aktualisierungszeitbegrenzungsangabe angeordnet ist, um anzugeben, dass die Autorisierungsänderung des ProSe eine dauerhafte Aktualisierung ist; und
wenn die Zeitinformationen getragen werden, angezeigt wird, dass die Aktualisierungszeitbegrenzungsangabe angeordnet ist, um anzugeben, dass die Autorisierungsänderung des ProSe einevorübergehende Aktualisierung ist und zu identifizieren, dass die Aktualisierung in einer von den Zeitformationen dargestellten Zeitdauer gültig ist.

7. Verfahren nach einem der Ansprüche 1 - 5, wobei die aktualisierten Autorisierungsinformationen ferner eine Autorisierungsartp umfassen; die Autorisierungsart umfasst: eine beliebige Art einer vollständigen Autorisierung, eine bedingte Autorisierung und keine Autorisierung.

8. Verfahren nach Anspruch 1, ferner umfassend:
Erhalten, durch eine ProSe-Funktion eines Heimnetzwerks oder eines Mobilitätsmanagementelements (MME) eines besuchten Netzwerks, von Autorisierungsinformationen von einem Heimteilnehmerserver, HSS, wobei die Autorisierungsinformationen umfassen: eine Aktualisierungszeitbegrenzungsangabe und/oder Zeitinformationen, und/oder eine Autorisierungsart.

9. System zum Verarbeiten einer Autorisierungsänderung eines auf Nähe basierten Dienstes, ProSe, **gekennzeichnet durch** umfassend: eine erste Netzwerkelementvorrichtung zum Konfigurieren einer ProSe-Funktion eines besuchten Netzwerks oder eines lokalen Netzwerks und eine zweite Netzwerkelementvorrichtung zum Konfigurieren einer ProSe-Funktion von einem Heimnetzwerk;
wobei die erste Netzwerkelementvorrichtung umfasst:
eine Auslöseeinheit, die angeordnet ist, um eine erneute Autorisierung des ProSe auszulösen; und
eine Sendeeinheit, die angeordnet ist, um aktualisierte Autorisierungsinformationen an die zweite Netzwerkelementvorrichtung zu senden, wobei die aktualisierten Autorisierungsinformationen umfassen: eine Aktualisierungszeitbegrenzungsangabe; oder die aktualisierten Autorisierungsinformationen umfassen: eine Aktualisierungszeitbegrenzungsangabe, und Zeitinformationen;
wobei die Aktualisierungszeitbegrenzungsangabe angeordnet ist, um anzugeben, ob die Autorisierungsänderung des ProSe eine vorübergehende Aktualisierung oder eine dauerhafte Aktualisierung ist.

10. System nach Anspruch 9,
wobei die Zeitinformationen eingestellt sind, um Zeitinformationen zu sein, um vorübergehend zu untersagen, wenn die Autorisierungsänderung des ProSe eine vorübergehende Aktualisierung ist; und
die Zeitinformationen umfassen: absolute Zeit oder relative Zeit.

11. System nach Anspruch 9, wobei die zweite Netzwerkelementvorrichtung umfasst:
eine Aktualisierungsbenachrichtigungseinheit, die angeordnet ist, um das Benutzergerät, UE, über die aktualisierten Autorisierungsinformationen zu benachrichtigen; oder, um eine aktualisierte Autorisierungsbenachrichtigung an das UE zu senden, um das UE zu veranlassen, eine Dienstautorisierungsanforderung zu initiieren; oder um das UE über die aktualisierten Autorisierungsinformationen zu benachrichtigen, nachdem das UE die Dienstautorisierungsanforderung initiiert hat.

12. System nach Anspruch 9, wobei die Sendeeinheit der ersten Netzwerkelementvorrichtung ferner angeordnet ist, um die von der UE initiierte Dienstautorisierungsanforderung zu empfangen und die Dienstautorisierungsanforderung an die zweite Netzwerkelementvorrichtung weiterzuleiten; um eine Dienstautorisierungsantwort für die Dienstautorisierungsanforderung von der zweiten Netzwerkelementvorrichtung zu empfangen, und die aktualisierten Autorisierungsinformationen, die in der Dienstautorisierungsantwort getragen werden, zu erfassen, und um das UE über die aktualisierten Autorisierungsinformationen zu benachrichtigen.

13. System nach Anspruch 9, wobei die zweite Netzwerkelementvorrichtung umfasst: eine Benachrichtigungseinheit und eine Sendeeinheit;
wobei die Benachrichtigungseinheit angeordnet ist, um die von dem UE initiierte Dienstautorisierungsanforderung zu empfangen, und das UE über die aktualisierten Autorisierungsinformationen zu benachrichtigen,
die Sendeeinheit der zweiten Netzwerkelementvorrichtung angeordnet ist, um die Dienstautorisierungsanforderung an die erste Netzwerkelementvorrichtung zu senden; und
die erste Netzwerkelementvorrichtung ferner umfasst: eine Empfangseinheit, die angeordnet ist, um die von der zweiten Netzwerkelementvorrichtung gesendete Dienstautorisierungsanforderung zu empfangen und eine Dienstautorisierungsantwort für die Dienstautorisierungsanforderung an die zweite Netzwerkelementvorrichtung zurückzugeben, wobei die aktualisierten Autorisierungsinformationen in der Dienstautorisierungsantwort getragen werden.

14. System nach einem der Ansprüche 9 - 13, wobei eine Implementierungsart für die Aktualisierungszeitbegrenzungsangabe eine der Arten wie folgt umfasst:
die Aktualisierungszeitbegrenzungsangabe wird so implementiert, dass ein neues Informationselement, IE, hinzugefügt wird; und
die Aktualisierungszeitbegrenzungsangabe wird in einer impliziten Weise implementiert,
und,
wobei Implementierung der Aktualisierungszeitbegrenzungsangabe in der impliziten Weise umfasst, dass:
wenn die Zeitinformationen nicht getragen werden, angezeigt wird, dass die Aktualisierungszeitbegrenzungsangabe angeordnet ist, um anzugeben, dass die Autorisierungsänderung des ProSe eine dauerhafte Aktualisierung ist; und
wenn die Zeitinformationen getragen werden, angezeigt wird, dass die Aktualisierungszeitbegrenzungsangabe angeordnet ist, um anzugeben, dass die Autorisierungsänderung des ProSe einevorübergehende Aktualisierung ist und zu identifizieren, dass die Aktualisierung in einer von den Zeitformationen dargestellten Zeitdauer gültig ist.

15. System nach einem der Ansprüche 9 - 13, wobei die aktualisierten Autorisierungsinformationen ferner eine Autorisierungsartp umfassen; die Autorisierungsart umfasst: eine beliebige Art einer vollständigen Autorisierung, eine bedingte Autorisierung und keine Autorisierung.

16. System nach Anspruch 9, wobei die zweite Netzwerkelementvorrichtung umfasst:
eine Erfassungseinheit, angeordnet, um Autorisierungsinformationen von einem Heimteilnehmerserver, HSS, zu erhalten, wobei die Autorisierungsinformationen umfassen: eine Aktualisierungszeitbegrenzungsangabe und/oder Zeitinformationen, und/oder eine Autorisierungsart;
oder, wobei das System ferner eine dritte Netzwerkelementvorrichtung umfasst, um ein Mobilitätsmanagementelement (MME) eines besuchten Netzwerks zu konfigurieren; wobei die dritte Netzwerkelementvorrichtung eine Erfassungseinheit umfasst, die angeordnet ist, um Autorisierungsinformationen von einem Heimteilnehmerserver, HSS, zu erhalten, wobei die Autorisierungsinformationen umfassen: eine Aktualisierungszeitbegrenzungsangabe und/oder Zeitinformationen und/oder eine Autorisierungsart.

17. Zweite Netzwerkelementvorrichtung, **gekennzeichnet durch** umfassend:
eine Empfangseinheit, angeordnet für eine auf Nähe basierte Dienst, ProSe, Funktion eines Heimnetzwerks, um aktualisierte Autorisierungsinformationen zu empfangen, die von einer ProSe-Funktion eines besuchten Netzwerks oder eines lokalen Netzwerks gesendet werden, wobei die aktualisierten Autorisierungsinformationen umfassen: eine Aktualisierungszeitbegrenzungsangabe; oder die aktualisierten Autorisierungsinformationen umfassen: eine Aktualisierungszeitbegrenzungsangabe, und Zeitinformationen;
wobei die Aktualisierungszeitbegrenzungsangabe angeordnet ist, um anzugeben, ob eine Autorisierungsänderung des ProSe eine vorübergehende Aktualisierung oder eine dauerhafte Aktualisierung ist.

18. Zweite Netzwerkelementvorrichtung nach Anspruch 17,
wobei die Zeitinformationen Zeitinformationen sind, um vorübergehend zu untersagen, wenn die Autorisierungsänderung des ProSe eine vorübergehende Aktualisierung ist; und
die Zeitinformationen umfassen: absolute Zeit oder relative Zeit.

19. Zweite Netzwerkelementvorrichtung nach Anspruch 17, wobei eine Benachrichtigungseinheit für die ProSe-Funktion des Heimnetzwerks angeordnet ist, um das Benutzergerät, UE, über die aktualisierten Autorisierungsinformationen zu benachrichtigen; oder, damit die ProSe-Funktion des Heimnetzwerks eine aktualisierte Autorisierungsbenachrichtigung an das UE sendet, um das UE zu veranlassen, eine Dienstautorisierungsanforderung zu initiieren; oder, damit die ProSe-Funktion des Heimnetzwerks das UE über die aktualisierten Autorisierungsinformationen benachrichtigt, nachdem das UE die Dienstautorisierungsanforderung initiiert hat.

20. Zweite Netzwerkelementvorrichtung nach Anspruch 17, wobei die Empfangseinheit ferner angeordnet ist, dass die ProSe-Funktion des Heimnetzwerks eine von der ProSe-Funktion des besuchten Netzwerks oder des lokalen Netzwerks gesendete Dienstautorisierungsanforderung empfängt und eine Dienstautorisierungantwort für die Dienstautorisierungsanforderung an die ProSe-Funktion des besuchten Netzwerks oder des lokalen Netzwerks zurückgibt, wobei die aktualisierten Autorisierungsinformationen in der Dienstautorisierungsantwort getragen werden.

21. Zweite Netzwerkelementvorrichtung nach Anspruch 17, wobei die Empfangseinheit ferner angeordnet ist, dass die ProSe-Funktion des Heimnetzwerks die von der UE initiierte Dienstautorisierungsanforderung empfängt und die UE über die aktualisierten Autorisierungsinformationen benachrichtigt.
und,
wobei die Empfangseinheit weiterhin angeordnet ist, dass die ProSe-Funktion des Heimnetzwerks nach Weiterleitung der Dienstautorisierungsanforderung an die ProSe-Funktion des besuchten Netzwerks oder des lokalen Netzwerks eine Dienstautorisierungsantwort für die von der ProSe-Funktion des besuchten Netzwerks oder des lokalen Netzwerks zurückgegebene Dienstautorisierungsanforderung empfängt, wobei die aktualisierten Autorisierungsinformationen in der Dienstautorisierungsantwort getragen werden,
und,
die zweite Netzwerkelementvorrichtung ferner umfasst:
eine Beurteilungseinheit, angeordnet für die ProSe-Funktion des Heimnetzwerks, um zu beurteilen, ob es erforderlich ist, einen Heimteilnehmerserver, HSS, gemäß lokal konfigurierter Richtlinieninformationen zu benachrichtigen.

22. Zweite Netzwerkelementvorrichtung nach einem der Ansprüche 17 - 21, wobei eine Implementierungsart für die Aktualisierungszeitbegrenzungsangabe eine der Arten wie folgt umfasst:
die Aktualisierungszeitbegrenzungsangabe wird so implementiert, dass ein neues Informationselement, IE, hinzugefügt wird; und
die Aktualisierungszeitbegrenzungsangabe wird in einer impliziten Weise implementiert,
und,
wobei Implementierung der Aktualisierungszeitbegrenzungsangabe in der impliziten Weise umfasst, dass:
wenn die Zeitinformationen nicht getragen werden, angezeigt wird, dass die Aktualisierungszeitbegrenzungsangabe angeordnet ist, um anzugeben, dass die Autorisierungsänderung des ProSe eine dauerhafte Aktualisierung ist; und
wenn die Zeitinformationen getragen werden, angezeigt wird, dass die Aktualisierungszeitbegrenzungsangabe angeordnet ist, um anzugeben, dass die Autorisierungsänderung des ProSe eine vorübergehende Aktualisierung ist und zu identifizieren, dass die Aktualisierung in einer von den Zeitformationen dargestellten Zeitdauer gültig ist.

23. Zweite Netzwerkelementvorrichtung nach einem der Ansprüche 17 - 21, wobei die aktualisierten Autorisierungsinformationen ferner eine Autorisierungsartp umfassen; die Autorisierungsart umfasst: eine beliebige Art einer vollständigen Autorisierung, eine bedingte Autorisierung und keine Autorisierung.

## Revendications

1. Procédé de traitement d'une modification d'autorisation d'un service basé sur la proximité, ProSe, **caractérisé en ce qu'**il comprend :
le déclenchement, par une fonction ProSe d'un réseau visité ou un réseau local, de la réautorisation du ProSe (S11) ; et
l'envoi, par la fonction ProSe du réseau visité ou du réseau local, d'informations d'autorisation mises à jour à une fonction ProSe d'un réseau domestique (S12), les informations d'autorisation mises à jour comprenant : une indication de limite de temps de mise à jour ; ou les informations d'autorisation mises à jour comprennent : une indication de mise à jour et une information de temps ;
dans lequel l'indication de limite de temps de mise à jour est conçue pour indiquer si le changement d'autorisation du ProSe est une mise à jour temporaire ou permanente.

2. Procédé selon la revendication 1,
dans lequel le procédé comprend en outre : la définition des informations de temps en informations de temps pour interdiction temporaire si le changement d'autorisation du ProSe est une mise à jour temporaire, les informations de temps comprenant: un temps absolu ou un temps relatif.

3. Procédé selon la revendication 1, dans lequel, après que la fonction ProSe du réseau domestique a reçu l'information d'autorisation mise à jour, le procédé comprend en outre :
la notification, par la fonction ProSe du réseau domestique, de l'équipement utilisateur, UE, des informations d'autorisation mises à jour ; ou,
l'envoi, par la fonction ProSe du réseau domestique, d'une notification d'autorisation mise à jour à l'UE pour que l'UE déclenche une demande d'autorisation de service ; ou,
la notification, par la fonction ProSe du réseau domestique, de l'UE des informations d'autorisation mises à jour après que l'UE a initié la demande d'autorisation de service.

4. Procédé selon la revendication 1, **caractérisé en ce qu'**il comprend en outre :
la réception, par la fonction ProSe du réseau visité ou du réseau local, de la demande d'autorisation de service initiée par l'UE, et le transfert de la demande d'autorisation de service à la fonction ProSe du réseau domestique ;
la réception, par la fonction ProSe du réseau visité ou du réseau local, d'une réponse d'autorisation de service pour la demande d'autorisation de service de la fonction ProSe du réseau domestique, et l'acquisition des informations d'autorisation mises à jour contenues dans la réponse d'autorisation de service ; et
la notification, par la fonction ProSe du réseau visité ou du réseau local, de l'UE des informations d'autorisation mises à jour.

5. Procédé selon la revendication 1, **caractérisé en ce qu'**il comprend en outre :
la réception, par la fonction ProSe du réseau de rattachement, de la demande d'autorisation de service initiée par l'UE, et la notification à l'UE des informations d'autorisation mises à jour,
et,
dans lequel le procédé comprend en outre :
la réception, par la fonction ProSe du réseau domestique, de la demande d'autorisation de service initiée par l'UE et l'envoi de la demande d'autorisation de service à la fonction ProSe du réseau visité ou du réseau local ; et
la réception, par la fonction ProSe du réseau visité ou du réseau local, de la demande d'autorisation de service envoyée par la fonction ProSe du réseau domestique, et le renvoi d'une réponse d'autorisation de service pour la demande d'autorisation de service à la fonction ProSe du réseau domestique, dans lequel les informations d'autorisation mises à jour sont acheminées dans la réponse d'autorisation de service.

6. Procédé selon l'une quelconque des revendications 1 à 5, dans lequel une manière de mise en œuvre pour l'indication de limite de temps de mise à jour comprend l'une quelconque des manières suivantes :
l'indication de limite de temps de mise à jour est mise en œuvre de manière à ajouter un nouvel élément d'information, IE ; et
l'indication de limite de temps de mise à jour est implémentée de manière implicite, et,
dans lequel la mise en œuvre de l'indication de limite de temps de mise à jour de manière implicite comprend les éléments suivants :
si les informations de temps ne sont pas acheminées, il est indiqué que l'indication de limite de temps de mise à jour est conçue pour indiquer que le changement d'autorisation du ProSe est une mise à jour permanente ; et
si les informations de temps sont acheminées, il est indiqué que l'indication de limite de temps de mise à jour est conçue pour indiquer que le changement d'autorisation du serveur ProSe est une mise à jour temporaire et l'identification que la mise à jour est valide dans une période de temps représentée par les informations de temps.

7. Procédé selon l'une quelconque des revendications 1 à 5, dans lequel les informations d'autorisation mises à jour comprennent en outre un type d'autorisation ; le type d'autorisation comprend : tout type d'autorisation totale, une autorisation conditionnelle et aucune autorisation.

8. Procédé selon la revendication 1, comprenant en outre :
l'obtention, par une fonction ProSe d'un réseau domestique ou d'un élément de gestion de la mobilité, MME, d'un réseau visité, d'informations d'autorisation à partir d'un serveur d'abonné résidentiel, HSS, les informations d'autorisation comprenant: une indication de limitation de temps de mise à jour et / ou des informations de temps et / ou un type d'autorisation.

9. Système de traitement d'un changement d'autorisation d'un service basé sur la proximité, ProSe, **caractérisé en ce qu'**il comprend: un premier dispositif d'élément de réseau pour configurer une fonction ProSe d'un réseau visité ou un réseau local et un deuxième dispositif d'élément de réseau pour configurer une fonction ProSe d'un réseau domestique ;
dans lequel, le premier dispositif d'élément de réseau comprend :
une unité de déclenchement, agencée pour déclencher la réautorisation du ProSe ; et
une unité d'envoi, agencée pour envoyer des informations d'autorisation mises à jour au deuxième dispositif d'élément de réseau, les informations d'autorisation mises à jour comprennent : une indication de limite de temps de mise à jour ; ou les informations d'autorisation mises à jour comprennent : une indication de limite de temps de mise à jour et des informations de temps;
dans lequel l'indication de limitation du temps de mise à jour est conçue pour indiquer si le changement d'autorisation du serveur ProSe est une mise à jour temporaire ou permanente.

10. Système selon la revendication 9,
dans lequel les informations de temps sont configurées pour être des informations de temps pour une interdiction temporaire si le changement d'autorisation du ProSe est une mise à jour temporaire ; et
les informations de temps comprennent : le temps absolu ou le temps relatif.

11. Système selon la revendication 9, dans lequel le deuxième dispositif d'élément de réseau comprend :
une unité de notification de mise à jour, conçue pour notifier à l'équipement utilisateur, UE, les informations d'autorisation mises à jour ; ou, envoyer une notification d'autorisation mise à jour à l'UE pour que l'UE déclenche une demande d'autorisation de service ; ou, pour notifier à l'UE les informations d'autorisation mises à jour après que l'UE a initié la demande d'autorisation de service.

12. Système selon la revendication 9, dans lequel l'unité d'envoi du premier dispositif d'élément de réseau est en outre agencée pour recevoir la demande d'autorisation de service initiée par l'UE et pour transmettre la demande d'autorisation de service au deuxième dispositif d'élément de réseau ; recevoir une réponse d'autorisation de service pour la demande d'autorisation de service du deuxième dispositif d'élément de réseau et acquérir les informations d'autorisation mises à jour transportées dans la réponse d'autorisation de service ; et notifier à l'UE les informations d'autorisation mises à jour.

13. Système selon la revendication 9, dans lequel le deuxième appareil de réseau comprend : une unité de notification et une unité d'envoi ;
dans lequel, l'unité de notification est conçue pour recevoir la demande d'autorisation de service initiée par l'UE et pour notifier à l'UE les informations d'autorisation mises à jour,
l'unité d'envoi du deuxième dispositif d'élément de réseau est conçue pour envoyer la demande d'autorisation de service au premier dispositif d'élément de réseau ; et
le premier dispositif d'élément de réseau comprend en outre: une unité de réception, conçue pour recevoir la demande d'autorisation de service envoyée par le deuxième dispositif d'élément de réseau, et renvoyer une réponse d'autorisation de service pour la demande d'autorisation de service au deuxième dispositif d'élément de réseau, les informations d'autorisation mises à jour est porté dans la réponse d'autorisation de service.

14. Système selon l'une quelconque des revendications 9 à 13, dans lequel une manière de mise en œuvre pour l'indication de limite de temps de mise à jour comprend l'une quelconque des manières suivantes :
l'indication de limite de temps de mise à jour est mise en œuvre de manière à ajouter un nouvel élément d'information, IE ; et
l'indication de limite de temps de mise à jour est implémentée de manière implicite, et,
dans lequel la mise en œuvre de l'indication de limite de temps de mise à jour de manière implicite comprend les éléments suivants :
si les informations de temps ne sont pas acheminées, il est indiqué que l'indication de limite de temps de mise à jour est conçue pour indiquer que le changement d'autorisation du ProSe est une mise à jour permanente ; et
si les informations de temps sont acheminées, il est indiqué que l'indication de limite de temps de mise à jour est conçue pour indiquer que le changement d'autorisation du ProSe est une mise à jour temporaire et l'identification que la mise à jour est valide dans une période de temps représentée par les informations de temps.

15. Système selon l'une quelconque des revendications 9 à 13, dans lequel les informations d'autorisation mises à jour comprennent en outre un type d'autorisation ; le type d'autorisation comprend : tout type d'autorisation totale, une autorisation conditionnelle et aucune autorisation.

16. Système selon la revendication 9, dans lequel le deuxième dispositif d'élément de réseau comprend :
une unité d'acquisition, conçue pour obtenir des informations d'autorisation auprès d'un serveur d'hôtes résidentiel, HSS, dans laquelle les informations d'autorisation comprennent: une indication de limitation de temps de mise à jour et / ou des informations de temps et / ou un type d'autorisation ;
ou, dans lequel le système comprend en outre un troisième dispositif d'élément de réseau pour configurer un élément de gestion de mobilité, MME, d'un réseau visité ; dans lequel le troisième dispositif d'élément de réseau comprend une unité d'acquisition, conçue pour obtenir des informations d'autorisation auprès d'un serveur d'abonné résidentiel, HSS, dans lequel les informations d'autorisation comprennent : une indication de limite de temps de mise à jour et / ou des informations de temps et / ou un type d'autorisation.

17. Deuxième dispositif d'élément de réseau, **caractérisé en ce qu'**il comprend :
une unité de réception, agencée pour un service basé sur la proximité, ProSe, fonction d'un réseau domestique pour recevoir des informations d'autorisation mises à jour envoyées par une fonction ProSe d'un réseau visité ou d'un réseau local, les informations d'autorisation mises à jour comprenant : une indication de limite de temps de mise à jour ; ou les informations d'autorisation mises à jour comprennent : une indication de limite de temps de mise à jour et des informations de temps ;
dans lequel l'indication de limite de temps de mise à jour est conçue pour indiquer si un changement d'autorisation du ProSe est une mise à jour temporaire ou permanente.

18. Deuxième dispositif d'élément de réseau selon la revendication 17,
dans lequel l'information de temps est une information de temps pour interdiction temporaire si le changement d'autorisation du ProSe est une mise à jour temporaire ; et
les informations de temps comprennent: le temps absolu ou le temps relatif.

19. Deuxième dispositif d'élément de réseau selon la revendication 17, dans lequel une unité de notification est agencée pour que la fonction ProSe du réseau domestique avise l'équipement utilisateur, UE, des informations d'autorisation mises à jour ; ou, pour que la fonction ProSe du réseau domestique envoie une notification d'autorisation mise à jour à l'UE pour que l'UE déclenche une demande d'autorisation de service ; ou, pour que la fonction ProSe du réseau domestique notifie à l'UE les informations d'autorisation mises à jour après que l'UE a initié la demande d'autorisation de service.

20. Deuxième dispositif d'élément de réseau selon la revendication 17, dans lequel l'unité de réception est en outre agencée pour que la fonction ProSe du réseau domestique reçoit une demande d'autorisation de service envoyée par la fonction ProSe du réseau visité ou du réseau local, et renvoie une réponse d'autorisation de service pour la demande d'autorisation de service à la fonction ProSe du réseau visité ou du réseau local, les informations d'autorisation mises à jour étant acheminées dans la réponse d'autorisation de service.

21. Deuxième dispositif d'élément de réseau selon la revendication 17, dans lequel l'unité de réception est en outre agencée pour que la fonction ProSe du réseau domestique reçoit la demande d'autorisation de service initiée par l'UE, et notifie à l'UE les informations d'autorisation mises à jour,
et,
dans lequel l'unité de réception est en outre agencée pour que la fonction ProSe du réseau domestique reçoit, après avoir transféré la demande d'autorisation de service à la fonction ProSe du réseau visité ou du réseau local, une réponse d'autorisation de service pour la demande d'autorisation de service renvoyée par la fonction ProSe du réseau visité ou du réseau local, les informations d'autorisation mises à jour étant acheminées dans la réponse d'autorisation de service,
et,
le deuxième dispositif d'élément de réseau comprend en outre :
une unité de jugement, agencée pour la fonction ProSe du réseau domestique, afin de déterminer s'il est nécessaire d'avertir un serveur d'hôtes résidentiel, HSS, en fonction des informations de stratégie configurées localement.

22. Deuxième dispositif d'élément de réseau selon l'une quelconque des revendications 17 à 21, dans lequel une manière de mise en œuvre pour l'indication de limite de temps de mise à jour comprend l'une quelconque des manières suivantes :
l'indication de limite de temps de mise à jour est mise en œuvre de manière à ajouter un nouvel élément d'information, IE ; et
l'indication de limite de temps de mise à jour est implémentée de manière implicite, et,
dans lequel la mise en œuvre de l'indication de limite de temps de mise à jour de manière implicite comprend les éléments suivants :
si les informations de temps ne sont pas acheminées, il est indiqué que l'indication de limite de temps de mise à jour est conçue pour indiquer que le changement d'autorisation du ProSe est une mise à jour permanente ; et
si les informations de temps sont acheminées, il est indiqué que l'indication de limite de temps de mise à jour est conçue pour indiquer que le changement d'autorisation du ProSe est une mise à jour temporaire et pour indiquer que la mise à jour est valide dans une période de temps représentée par les informations de temps.

23. Deuxième dispositif d'élément de réseau selon l'une quelconque des revendications 17 à 21, dans lequel les informations d'autorisation mises à jour comprennent en outre un type d'autorisation ; le type d'autorisation comprend : tout type d'autorisation totale, une autorisation conditionnelle et aucune autorisation.
